# EUROPÄISCHE PATENTANMELDUNG

(11) **EP 0 844 019 A2**
(43) Veröffentlichungstag der Anmeldung: **27.05.1998**
(21) Anmeldenummer: 97119321.4
(22) Anmeldetag: 05.11.1997
(51) Int. Cl.: B01J 2/18

(54) **Verfahren und Vorrichtung zum Granulieren von flüssigen oder pastösen Stoffen**

(30) Priorität: 22.11.1996 DE 19648395
(71) Anmelder: MESSER GRIESHEIM GMBH, 60547 Frankfurt (DE)
(72) Erfinder: Zerwas, Stefan, 47443 Moers (DE)

(57) **Zusammenfassung**

Ein Verfahren zum Granulieren von flüssigen oder pastösen Stoffen, wie Lebensmitteln, durch Frosten zeichnet sich dadurch aus, daß ein impulsierender Strahl aus diesen Stoffen in ein Kühlmittelbad in einem Gehäuse eingeleitet wird, das Gehäuse in Vibrationen versetzt wird, und der durch die Vibrationen in Granulatstücke auseinandergebrochene Stoff nach einer vorbestimmten Verweilzeit aus dem Gehäuse ausgetragen wird.

## Beschreibung

Die Erfindung betrifft ein Verfahren und eine Vorrichtung zum Granulieren von flüssigen oder pastösen Stoffen, wie Lebensmittel.

Derzeit werden flüssige und pastöse Lebensmittel entweder in Form von Eisblöcken (z.B. Gemüse) konventionell oder als Soßen-Koagulate mit Fleisch- oder Fischgeschnetzeltem in Tumblem eingefroren. In beiden Fällen ist eine Portionierung praktisch ausgeschlossen.

Insbesondere in den Industrieländern nimmt die Zahl der Einzel-Haushalte zu. Zwar sind in den letzten Jahren die Verpackungen immer kleiner geworden. Allerdings sind aufgrund der umweltbedingten Vorschriften die Verpackungskosten stark angestiegen.

Der Erfindung liegt die Aufgabe zugrunde, ein Verfahren und eine Vorrichtung der oben angegebenen Art zu schaffen, mit denen ein portionierbares, gefrostetes Produkt bereitgestellt werden kann, dessen Verpackungskosten niedrig sind.

Zur Lösung dieser Aufgabe dienen ein Verfahren nach Patentanspruch 1 und eine Vorrichtung nach Patentanspruch 5.

Vorteilhafte Ausgestaltungen des Verfahrens und der Vorrichtung nach der Erfindung sind in den Unteransprüchen angegeben.

Bei einem Verfahren nach der Erfindung werden die flüssigen oder pastösen Stoffe, wie Lebensmittel, in einem impulsierenden Strahl über eine Eintragöffnung in ein wärmeisoliertes Gehäuse auf ein Transportblech geleitet, das in ein Kühlmittelbad, wie in ein Bad aus flüssigem Stickstoff, eintaucht. Auf diesem Transportblech wird der Stoff durch Vibrationen in Granulatstücke aufgebrochen und ebenfalls aufgrund der Vibrationen in Richtung eines Stoffaustrags transportiert. Die Verweilzeit in dem Gehäuse wird so eingestellt, daß das fertige Produkt in Form von tiefgefrorenen Granulatstücken eines Gewichtes von mindestens 3g beim Transport in Umgebungsatmosphäre zum Verbraucher nicht an- oder gar auftaut. In der Praxis beträgt die Verweilzeit zwischen drei und 15 Minuten.

Mit dem Verfahren und der Vorrichtung nach der Erfindung lassen sich die flüssigen oder pastösen Stoffe, z.B. fetthaltige Soßen, in Granulatstücke ausreichender Größe einfrieren. Die genannte Größe der Granulatstücke ist wünschenswert, um das gefrostete Produkt vom Supermarkt bis zum Endverbraucher ohne nennenswerte Antauerscheinungen transportieren zu können.

Zum Einpacken der Granulatstücke sind nicht mehrere kleine Portionsverpackungen erforderlich, in denen die Granulatstücke portioniert abgepackt sind. Vielmehr können die Granulatstücke in großen Sammel-Verpackungen verpackt werden und zum Endverbraucher geliefert werden. Dieser kann dann selbst das Produkt durch Entnehmen einer gewünschten Menge an Granulatstücken für den Eigenverbrauch oder den gemeinschaftlichen Verbrauch portionieren.

Die Erfindung ist im folgenden anhand schematischer Zeichnungen mit weiteren Einzelheiten näher erläutert. Es zeigen:

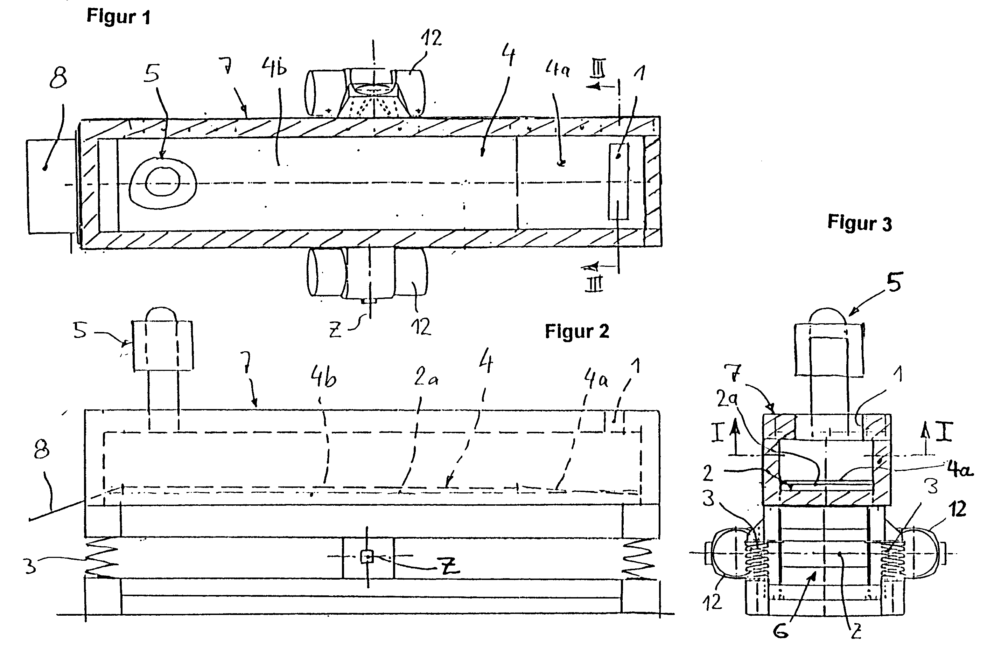

- Fig. 1: einen Längsschnitt nach der Linie I-I in Fig. 3 durch eine Vorrichtung nach der Erfindung;
- Fig. 2: eine Seitenansicht der Vorrichtung nach Fig. 1 und
- Fig. 3: einen Schnitt nach der Linie III-III in Fig. 1.

In den Figuren ist mit 7 ein wärmeisoliertes Gehäuse bezeichnet, das um eine horizontale Querachse z mittels eines Vibrationsapparates 6 mit vier Federn 3 an den Ecken des länglichen Gehäuses sowie mit zwei Exzentermotoren 12 in Vibrationsbewegungen versetzbar ist.

Das Gehäuse hat eine Eintragöffnung 1 für einen impulsierenden Strahl von flüssigen oder pastösen Stoffen, die in der Vorrichtung zu Granulatstücken eines Gewichtes von mindestens 3g tiefgefroren werden sollen.

In dem Gehäuse 7 befindet sich ein Bad 2 aus flüssigem Stickstoff, in welches ein leicht geneigter Abschnitt 4a eines Transportbleches 4 unterhalb der Eintragöffnung 1 eintaucht. An den leicht geneigten Abschnitt 4a des Transportbleches 4 schließt sich ein horizontaler Abschnitt 4b an, der oberhalb des Flüssigkeitsspiegels 2a des flüssigen Stickstoffes liegt. Durch den Kontakt mit dem flüssigen Stickstoff im Abschnitt 4a sowie durch Verdampfen des flüssigen Stickstoffes gegen die Unterseite des Transportbleches im Abschnitt 4b erhält das Blech eine Oberflächentemperatur von -100°C oder weniger. An den Abschnitt 4b schließt sich ein Stoffaustragblech 8 an, welches über eine nicht dargestellte Öffnung aus dem Gehäuse herausragt.

Im Bereich des Gehäuseendes nahe dem Stoffaustragblech 8 ist ein Sauggebläse 5 zum Absaugen von verdampftem Stickstoff vorgesehen, das zum Unterkühlen des Transportbleches 4 beiträgt.

Der einzufrierende Stoffstrom wird über die Eintragöffnung 1 in das Stickstoffbad 2 eingetragen. Durch den direkten Kontakt mit dem flüssigen Stickstoff wird der Stoff in kürzester Zeit angefroren. Aufgrund der Vibrationen des Gehäuses 7 und damit des Transportbleches 4, deren Amplituden in bekannter Weise einstellbar sind, löst sich der angefrorene Stoff von dem Transportblech und bricht auseinander. Gleichzeitig wird er in Richtung zum Stoffaustragblech 8 auf dem Transportblech 4 transportiert, so daß er zunächst aus dem Stickstoffbad heraus auf den horizontalen Abschnitt 4b des Transportbleches gelangt und von dort zum Stoffaustrag 8 in Granulatform weitertransportiert wird. Auf dem horizontalen Abschnitt 4b des Transportbleches wird der Stoff weiter eingefroren und zu Granulatstücken aufgebrochen. Die fertigen, durchgefrorenen Granulatstücke werden am Ende des Gehäuses 1 über den Stoffaustrag 8 ausgetragen.

Ein gemäß der Erfindung gewonnenes tiefgefrorenes Lebensmittelprodukt läßt sich ohne nennenswerte Antauerscheinungen vom Supermarkt bis zum Endverbraucher transportieren und dort von diesem in beliebiger Weise portionieren.

Ein Beispiel der erfindungsgemäßen Vorrichtung kann eine Gefrierfläche (Oberfläche des Transportblechs 4) von 1,5 m² haben und damit 300 kg eines tiefgefrorenen, stückigen Produkts pro Stunde liefern.

Die in der obigen Beschreibung, den Figuren und den Ansprüchen offenbarten Merkmale können sowohl einzeln als auch in beliebiger Kombination für die Verwirklichung der Erfindung von Bedeutung sein.

## Patentansprüche

1. Verfahren zum Granulieren von flüssigen oder pastösen Stoffen durch Frosten, bei dem
a) ein impulsierender Strahl aus diesen Stoffen in ein Kühlmittelbad eingeleitet wird,
b) das Kühlmittelbad in Vibrationen versetzt wird,
c) der durch die Vibrationen in Granulatstücke auseinandergebrochene Stoff nach einer vorbestimmten Verweilzeit aus dem Kühlmittelbad ausgetragen wird.

2. Verfahren nach Anspruch 1,
dadurch gekennzeichnet,
daß die Verweilzeit des Stoffes im Bereich von 3 bis 15 min. liegt.

3. Verfahren nach Anspruch 2,
dadurch gekennzeichnet,
daß der Stoff mittels der Vibrationen transportiert wird.

4. Verfahren nach einem der Ansprüche 1 bis 3,
dadurch gekennzeichnet,
daß das Kühlmittel flüssiger Stickstoff ist.

5. Vorrichtung zum Granulieren von flüssigen oder pastösen Stoffen durch Gefriertrocknen, umfassend:
a) ein wärmeisoliertes Gehäuse (7) mit
- einem Kühlmittelbad,
- einer Eintragöffnung (1) für einen impulsierenden Stoffstrahl,
- einem in das Kühlmittelbad (2) eintauchenden Transportblech (4) für den Stoff, auf den der Stoffstrahl auftrifft,
- einem an das Trartsportblech (4) anschließenden Stoffaustrag (8);
und
b) eine Vibrationseinrichtung (3, 6, 12) zum Erzeugen von Vibrationen des Gehäuses und damit des Transportblechs (4) im Sinne eines Stofftransports in Richtung des Stoffaustrages (8).

6. Vorrichtung nach Anspruch 5,
dadurch gekennzeichnet,
daß das Transportblech (4) einen im Bereich unterhalb der Eintragöffnung (1) gelegenen geneigten Abschnitt (4a), der in das Kühlmittelbad (2) eintaucht, sowie einen daran anschließenden horizontalen Abschnitt (4b) aufweist, der sich oberhalb des Kühlmittelbades in Richtung zum Stoffaustrag (8) erstreckt.

7. Vorrichtung nach Anspruch 5 oder 6,
dadurch gekennzeichnet,
daß ein Sauggebläse (5) zum Absaugen verdampften Kühlmittels vorgesehen ist.
